# DEMANDE DE BREVET EUROPEEN

(11) **EP 3 968 203 A1**
(43) Date de publication de la demande: **16.03.2022**
(21) Numéro de dépôt: 21194769.2
(22) Date de dépôt: 03.09.2021
(51) Int. Cl.: G06F 30/20, G06F 30/367, G06F 30/373, G06F 111/10

(54) **SELECTION D'UN MODELE DE TRANSFORMATEUR**

(30) Priorité: 09.09.2020 FR 2009120
(71) Demandeur: Schneider Electric Industries SAS, 92500 Rueil-Malmaison (FR)
(72) Inventeur: CORRECHER, Sébastien, 57050 Le Ban-Saint-Martin (FR)
(74) Mandataire: Schneider Electric

(57) **Abrégé**

Procédé de sélection (100, 200) d'un modèle de transformateur, le procédé étant mis en œuvre par un système informatique (400), le procédé comprenant :
- la modélisation d'un modèle de transformateur comprenant une bobine (10) configurée pour supporter un champ électrique ;
- la détermination d'un intervalle de fréquences comprenant un ensemble de fréquences de résonance du modèle de transformateur ;
- le calcul d'un champ électrique maximal agissant sur la bobine (10) lorsque le modèle de transformateur est traversé par une tension oscillant sur ledit intervalle de fréquences ;
- la comparaison du champ électrique maximal avec une valeur maximale admissible de champ électrique ; et
- la sélection du modèle de transformateur en fonction de la comparaison effectuée précédemment.

## Description

### Domaine technique

La présente divulgation est relative à un procédé de sélection d'un modèle de transformateur. La présente divulgation vise également un programme informatique comportant des instructions pour la mise en oeuvre du procédé de sélection d'un modèle de transformateur, ainsi qu'un système informatique. Enfin, la présente divulgation vise un procédé de fabrication d'un transformateur.

### Technique antérieure

Classiquement, une installation électrique comporte un transformateur permettant de réguler les valeurs de tension d'un courant électrique circulant dans l'installation. Le transformateur comporte un bobinage conformé par une ou plusieurs bobines placées autour d'un noyau magnétique du transformateur.

Dans certains cas, un disjoncteur est également prévu dans l'installation électrique afin de protéger le transformateur contre un risque de surcharge ou de court-circuit.

Il est cependant connu que lors des opérations d'ouverture ou de fermeture du disjoncteur, une surtension de haute fréquence peut atteindre le transformateur. Cette surtension peut provoquer un claquage du transformateur.

En particulier, le claquage du transformateur peut survenir lorsqu'une amplitude de la surtension dépasse une amplitude de tension supportée par le transformateur. En d'autres termes, le claquage du transformateur peut avoir lieu lorsque la surtension dépasse un niveau d'impulsion de base du transformateur. Le niveau d'impulsion de base est aussi dénommé « niveau BIL », par son nom en anglais « Basic Impulse Level ».

Ce problème est d'ordinaire résolu à partir de l'installation d'un parafoudre relié au transformateur. Le parafoudre permet d'atténuer ou filtrer l'amplitude des tensions arrivant dans le transformateur, de manière à assurer qu'elles sont en dessous du niveau BIL du transformateur. Dans certains cas, ce problème est résolu à partir de l'installation de varistances dans le transformateur reliées à la terre. Les varistances ont une tension nominale plus élevée que la tension supportée par le transformateur. Lorsque l'amplitude des tensions arrivant dans le transformateur dépasse le niveau BIL du transformateur, la surtension atteignant la varistance est conduite vers la terre, et non vers le transformateur. Le transformateur est ainsi protégé contre les surtensions.

Le claquage du transformateur peut néanmoins survenir aussi lorsque le bobinage subit un phénomène de résonance. Ce phénomène peut avoir lieu lorsqu'une tension circulant dans le transformateur oscille à une fréquence correspondant à une fréquence de résonance du transformateur.

Actuellement, le risque de phénomène de résonance dans le bobinage est limité à partir de l'installation d'un filtre RC connecté au transformateur. Le filtre RC permet de diminuer la fréquence de la tension circulant dans le transformateur, de manière à l'éloigner des fréquences de résonance du transformateur.

Néanmoins, l'installation du filtre RC implique l'installation d'un élément supplémentaire dans l'installation électrique, ce qui complexifie la mise en oeuvre et la maintenance de ladite installation électrique.

### Résumé

La présente divulgation vise à améliorer la situation.

À cette fin, il est décrit un procédé de sélection d'un modèle de transformateur, le procédé étant mis en oeuvre par un système informatique, le procédé comprenant :
- la modélisation d'un modèle de transformateur comprenant une bobine configurée pour supporter un champ électrique ;
- la détermination d'un intervalle de fréquences comprenant un ensemble de fréquences de résonance du modèle de transformateur ;
- le calcul d'un champ électrique maximal agissant sur la bobine lorsque le modèle de transformateur est traversé par une tension oscillant sur ledit intervalle de fréquences ;
- la comparaison du champ électrique maximal avec une valeur maximale admissible de champ électrique ; et
- la sélection du modèle de transformateur en fonction de la comparaison effectuée précédemment.

Ainsi, avantageusement, la sélection du modèle de transformateur est faite par modélisation du champ électrique maximal agissant sur la bobine lorsque le modèle de transformateur est traversé par la tension oscillant dans l'intervalle de fréquences comprenant l'ensemble de fréquences de résonance du modèle de transformateur. La comparaison du champ électrique maximal avec la valeur maximale admissible de champ électrique permet de sélectionner le modèle de transformateur peu susceptible de provoquer un claquage sous l'action de la tension oscillant dans ledit intervalle de fréquences. Le risque de claquage de la bobine lorsque la tension circulant dans ledit modèle de transformateur oscille à l'une des fréquences de résonance du modèle de transformateur sélectionné est ainsi limité.

A la différence d'un calcul de la tension électrique par exemple, le calcul du champ électrique permet la prise en compte de la géométrie et du dimensionnement dans le modèle du transformateur, en particulier de la bobine, qui peut comporter des zones irrégulières, telles que des pics dans lesquelles une accumulation de charges peut se produire, donnant lieu à un fort champ électrique.

Cela permet donc de limiter le risque de claquage du transformateur sans besoin d'installer des éléments supplémentaires.

De surcroît, le procédé étant mis en oeuvre par le système informatique, plusieurs modèles de transformateur peuvent être modélisés et testés tout en réduisant les coûts matériels et économiques.

Dans certains cas la détermination de l'intervalle de fréquences comprenant l'ensemble des fréquences de résonance du modèle de transformateur est réalisée à partir de la détermination d'une réponse en impédance du modèle de transformateur. Dans certains exemples, un graphe représentant l'évolution de l'impédance du modèle de transformateur en fonction de la fréquence à laquelle oscille une tension agissant sur ledit modèle de transformateur peut être obtenu. A partir de ce graphe, l'intervalle de fréquences comprenant l'ensemble de fréquences de résonance du modèle de transformateur peut être déterminé.

Dans certains cas, le procédé de sélection d'un modèle de transformateur comprend en outre la détermination d'une distribution de tension dans la bobine. La détermination de la distribution de tension permet par exemple de déterminer l'évolution d'un gradient de tension le long de la bobine. Dans certains cas, la sélection du modèle de transformateur tient compte d'une caractéristique de la distribution de tension dans la bobine. Ainsi, la sélection du modèle de transformateur peut par exemple se faire de manière à ce que la distribution de tension soit la plus constante possible le long de la bobine.

Dans certains cas, la modélisation du modèle de transformateur comprend la modélisation de la bobine avec une pluralité de galettes, chaque galette de la bobine comprenant une pluralité de spires. La modélisation permet par exemple de choisir un nombre de galettes et un nombre de spires de la bobine. En fonction du nombre de galettes et de spires de chaque galette, le champ électrique maximal agissant sur la bobine peut être différent. De même, la valeur maximale admissible de champ électrique peut être différente. Dans certains cas, la modélisation du modèle de transformateur comprend la modélisation de la bobine avec un espace prévu entre chaque galette de la bobine. La modélisation permet ainsi par exemple de choisir une distance entre chacune des galettes de la bobine. En fonction de la distance entre galettes, au moins l'un parmi le champ électrique maximal agissant sur la bobine et la valeur maximale admissible de champ électrique peuvent être différents. De même, le gradient de tension le long de la bobine peut être différent. Dans certains cas, la modélisation du modèle de transformateur comprend le choix d'un matériau disposé entre chaque spire de la pluralité de spires de la bobine. Ainsi, en fonction du matériau choisi, le champ électrique maximal agissant sur la bobine peut être différent. De même, la valeur maximale admissible de champ électrique peut être différente. La modélisation permet en outre, en fonction des caractéristiques du modèle de transformateur, et d'une tension d'entrée spécifique, de calculer le champ électrique maximal dans le modèle de transformateur.

Dans certains cas, la modélisation du modèle de transformateur comprend le choix d'une résine pour enrober la bobine. Ainsi, en fonction de la résine choisie, le champ électrique maximal agissant sur la bobine peut être différent. De même, la valeur maximale admissible de champ électrique peut être différente.

Dans certains cas, la bobine est modélisée de manière à choisir au moins un paramètre structurel parmi :
- un nombre total de galettes ;
- un nombre total de spires dans chaque galette ;
- une longueur de l'espace prévu entre chaque galette de la bobine ;
- une distance entre bobines haute tension et bobines basse tension concentriques ;
- le matériau disposé entre chaque spire de la pluralité de spires de la bobine ; et
- la résine enrobant la bobine.

Ainsi, les caractéristiques de la bobine modélisée peuvent changer en fonction des choix des paramètres structuraux, ce qui permet d'obtenir des comportements différents pour le modèle de transformateur. Ainsi, il est possible de sélectionner le modèle de transformateur avec un comportement satisfaisant lorsque la tension oscillant sur l'intervalle de fréquences comprenant l'ensemble de fréquences de résonance du modèle de transformateur agit sur ledit modèle de transformateur.

Dans certains cas, le procédé de sélection d'un modèle de transformateur comprend en outre la modélisation d'un ou plusieurs modèle(s) de transformateur supplémentaire(s), chaque modèle de transformateur supplémentaire comprenant une bobine respective configurée pour supporter un champ électrique respectif, le procédé comprenant en outre la détermination d'un intervalle de fréquences comprenant un ensemble de fréquences de résonance respectives de chaque modèle de transformateur supplémentaire. Ainsi, plusieurs modèles de transformateur peuvent être testés avant de sélectionner un modèle de transformateur.

Selon un autre aspect, il est décrit un procédé de fabrication d'un transformateur comprenant le procédé de sélection d'un modèle de transformateur décrit ci-avant, le procédé de fabrication comprenant la fabrication du transformateur selon le modèle sélectionné. Le procédé de fabrication permet donc d'obtenir le transformateur ayant des caractéristiques correspondant au modèle de transformateur sélectionné.

Dans certains cas, le transformateur est un transformateur de type sec enrobé. Ainsi, une résine enrobe la bobine du transformateur, ce qui permet, entre autres, d'éviter que la bobine du transformateur entre en contact avec un fluide circulant à proximité du transformateur.

Selon un autre aspect, il est décrit un programme informatique comportant des instructions pour la mise en œuvre du procédé de sélection d'un modèle de transformateur tel que décrit ci-avant, lorsque ce programme est exécuté par un processeur adapté pour la mise en œuvre dudit procédé de sélection d'un modèle de transformateur. Ainsi, le procédé de sélection d'un modèle de transformateur peut être mis en œuvre par le programme informatique, ce qui évite les aléas d'une mise en œuvre manuelle.

Selon un autre aspect, il est décrit un système informatique comprenant un processeur adapté pour la mise en œuvre du procédé de sélection d'un modèle de transformateur tel que décrit ci-avant. Ainsi, le procédé de sélection d'un modèle de transformateur peut être mis en œuvre par le système informatique. Cela permet, entre autres, de reproduire plusieurs fois ledit procédé de sélection d'un modèle de transformateur tout en limitant les coûts.

### Brève description des dessins

D'autres caractéristiques et avantages apparaîtront au cours de la description suivante de quelques formes de réalisation, données à titre d'exemple non limitatif, en regard des dessins joints. Sur les dessins :
[Fig. 1] montre un premier exemple d'un procédé de sélection d'un modèle de transformateur selon la présente divulgation.
[Fig. 2] montre une vue schématique d'une coupe longitudinale d'un premier exemple de bobine d'un transformateur.
[Fig. 3] montre un graphe représentant un exemple de courbe d'impédance associée à la bobine de la figure 2.
[Fig. 4] montre un deuxième exemple de procédé de sélection d'un modèle de transformateur selon la présente divulgation.
[Fig. 5] montre un graphe représentant un exemple de courbe de distribution de tensions associée à la bobine de la figure 2.
[Fig. 6] montre un exemple d'un procédé de fabrication d'un transformateur selon la présente divulgation.
[Fig. 7] représente schématiquement un exemple de système informatique selon la présente divulgation.

### Description des modes de réalisation

Sur les différentes figures, les mêmes références désignent des éléments identiques ou similaires.

Cet exposé concerne un procédé de sélection d'un modèle de transformateur.

Un procédé de sélection peut être compris comme un protocole spécifique conduisant à choisir le modèle de transformateur. Le protocole a pour but en particulier de choisir un modèle de transformateur en fonction d'un niveau de performance estimé pour le modèle de transformateur dans un contexte spécifique. Dans certains cas, le protocole a pour but de choisir le modèle de transformateur parmi une pluralité de modèles de transformateur. Dans certains cas, la pluralité de modèles de transformateur comprend au moins deux modèles de transformateur. Dans de tels cas, le choix du modèle de transformateur est fait en fonction d'un niveau de performance estimé pour chaque modèle de transformateur dans un contexte spécifique. Plus précisément, dans de tels cas, le protocole a pour but de permettre de choisir, parmi la pluralité de modèles de transformateur, le modèle de transformateur ayant un niveau de performance amélioré dans le contexte spécifique. Dans certains cas, le choix du modèle de transformateur est fait parmi une pluralité de modèles de transformateur ayant un niveau de performance satisfaisant dans le contexte spécifique en fonction des paramètres tels le coût ou la disponibilité des matériaux nécessaires. Dans de tels cas, le modèle de transformateur choisi est celui dont les matériaux nécessaires sont moins coûteux ou davantage disponibles.

Le contexte spécifique peut comprendre un ensemble de paramètres externes au modèle de transformateur qui ont une influence sur le niveau de performance estimé dudit modèle de transformateur. Des exemples de paramètres externes influant sur le niveau de performance du transformateur sont par exemple un champ électrique, une tension ou une intensité agissant sur le modèle de transformateur. Dans ce qui suit, l'expression « champ électrique » fait référence par exemple à une intensité d'un champ créé par des particules électriquement chargées. Le champ électrique est par exemple exprimé en volt par mètre (V/m).

Le niveau de performance est compris comme un comportement prévu pour le modèle de transformateur lorsqu'il est dans ledit contexte spécifique. Dans certains exemples, le niveau de performance est la capacité du modèle de transformateur à supporter le champ électrique, la tension ou l'intensité agissant sur le modèle de transformateur en évitant ou en réduisant la possibilité d'être endommagé. Dans certains cas, le niveau de performance peut dépendre d'une valeur du champ électrique agissant sur le modèle de transformateur. Dans ces cas, le niveau de performance est jugé acceptable lorsque la valeur du champ électrique agissant sur le modèle de transformateur est inférieure à une valeur maximale admissible de champ électrique.

Par « valeur maximale admissible de champ électrique » on entend une valeur de champ électrique agissant sur le modèle de transformateur en dessous de laquelle les possibilités d'endommagement du modèle de transformateur sont limitées. Une valeur maximale admissible de champ électrique est par exemple 10 kV/mm. Une valeur maximale admissible de champ électrique est par exemple 15 kV/mm. Une valeur maximale admissible de champ électrique est par exemple 5 kV/mm.

Par « modèle de transformateur » on entend une création virtuelle d'un transformateur. Un transformateur peut être entendu comme un appareil électrique configuré pour transformer un signal d'entrée en un signal de sortie à partir d'un phénomène d'induction électromagnétique. Le signal d'entrée et le signal de sortie sont dans certains cas des signaux de type alternatif. Le signal d'entrée est par exemple caractérisé par une première intensité et une première tension. Le signal de sortie est par exemple caractérisé par une deuxième intensité et une deuxième tension. La première intensité est différente de la deuxième intensité, et la première tension est différente de la deuxième tension. La première intensité et la première tension définissent, au moins en partie, ledit contexte spécifique du modèle de transformateur.

Le transformateur comprend au moins une bobine et un circuit magnétique, aussi dit noyau magnétique. Dans certains exemples, le transformateur comprend au moins une bobine haute tension et au moins une bobine basse tension concentriques. Le noyau magnétique est fait en matériau ferromagnétique. Dans certains exemples, le noyau magnétique est un noyau de fer doux. Le noyau magnétique peut comprendre une culasse supérieure, une culasse inférieure et au moins un bras. Dans certains cas, le circuit magnétique peut comprendre une seule culasse et au moins un bras. L'au moins un bras et la (les) culasse(s) sont formés chacun par un ensemble de plaques adjacentes les unes aux autres. L'au moins un bras s'étend par exemple sensiblement perpendiculairement par rapport à la (aux) culasse(s). Dans certains cas, le transformateur comprend deux bras reliés entre eux par la (les) culasse(s). Dans certains cas, le transformateur comprend trois bras reliés entre eux par la (les) culasse(s), par exemple quand le transformateur est un transformateur triphasé. Tout autre nombre de bras est envisageable.

Une bobine selon cet exposé fait partie d'un enroulement. Par « enroulement » on entend un ensemble de spires formant un circuit électrique associé à l'une des tensions pour lesquelles le transformateur a été établi. En fonction de la tension assignée à l'enroulement, l'enroulement est un enroulement haute tension ou un enroulement basse tension. L'enroulement haute tension est l'enroulement d'un même transformateur dont la tension assignée est la plus élevée. L'enroulement basse tension est l'enroulement d'un même transformateur dont la tension assignée est la plus basse.

Une bobine selon cet exposé est par exemple une bobine haute tension. Par «bobine haute tension » on entend une bobine faisant partie d'un enroulement de plus haute tension. La bobine est donc susceptible de recevoir des surtensions de haute fréquence car elle peut être connectée à un disjoncteur haute tension. Selon cet exposé, une bobine peut comprendre un ensemble de galettes. Les galettes sont reparties le long d'une direction longitudinale de chaque bobine. Dans certains cas la bobine comprend plus de sept galettes. Dans certains cas, la bobine comprend moins de vingt galettes. Dans certains cas, la bobine comprend entre sept et quinze galettes. Les galettes consécutives sont séparées entre elles par un espace. Chaque espace entre galettes consécutives a une longueur prédéterminée. La longueur prédéterminée correspond à une distance entre deux galettes consécutives. Dans certains cas, tous les espaces entre galettes consécutives ont la même longueur prédéterminée. Dans certains cas, les espaces entre galettes consécutives ont des longueurs différentes. Les galettes sont par exemple connectées entre elles en série.

Dans certains exemples, chaque galette comprend un ensemble de spires. Dans certains exemples, chaque galette comprend quelques dizaines de spires. Dans certains cas, l'ensemble de spires de chaque galette est formé par des enroulements d'un fil métallique dans un plan sensiblement perpendiculaire à une direction longitudinale de la bobine correspondant à une direction longitudinale d'un bras du transformateur. Chaque galette est alors comprise dans un plan respectif. Dans certains cas, l'ensemble de spires de chaque galette est formé par des enroulements du fil métallique dans plusieurs plans empilés et sensiblement perpendiculaires à la direction longitudinale de la bobine. Le fil métallique peut par exemple être un fil en cuivre. Le fil peut avoir une forme cylindrique ou plate par exemple. Dans certains exemples, plus de 500 spires sont prévues dans la bobine. Dans certains exemples, moins de 1000 spires sont prévues dans la bobine.

Dans certains exemples, un matériau isolant est disposé entre chaque spire. Le matériau isolant est par exemple un matériau polymère. Dans certains cas, le matériau isolant est du polyéthylène téréphtalate (PET). Le matériau isolant isole électriquement les spires entre elles.

Cet exposé concerne par exemple des transformateurs de type sec enrobé. Dans un transformateur de type sec enrobé, chaque bobine est entourée d'une résine. Dans certains exemples, la résine est de type thermodurcissable. Dans certains exemples, la résine est une résine époxy. La résine évite que chaque bobine entre en contact avec un fluide circulant à proximité du transformateur. Le fluide est par exemple une vapeur d'eau provoquant une humidité ambiante autour du transformateur. De même, la résine évite que des particules polluantes entrent en contact avec chaque bobine. La résine permet également de limiter les risques d'incendie du transformateur. Le transformateur de type sec enrobé est en outre caractérisé par le fait d'employer uniquement de l'air pour se refroidir. Cela permet de simplifier sa structure, diminuer son encombrement et limiter les coûts d'usage et maintenance. Dans certains cas, chaque bobine est enrobée d'un matériau isolant différent de la résine. Dans certains exemples, le matériau isolant est un polymère.

Une bobine selon cet exposé est par exemple enroulée autour d'un bras du noyau magnétique. Dans certains cas, une seule bobine est enroulée autour de chaque bras du noyau magnétique. Dans d'autres cas, plusieurs bobines sont enroulées autour de certains ou de chaque bras.

Plusieurs types de transformateur existent en fonction du nombre d'enroulements par transformateur et du nombre de bobines par bras du noyau magnétique du transformateur. Dans certains cas, le transformateur peut comprendre deux bobines enroulées chacune autour de bras distincts du noyau magnétique. L'une des bobines est dite « enroulement primaire » et l'autre bobine est dite « enroulement secondaire ». L'enroulement primaire est configuré pour recevoir le signal d'entrée et l'enroulement secondaire est configuré pour créer le signal de sortie. Le transformateur est alors un transformateur de type monophasé. Dans certains cas, le transformateur peut comprendre deux bobines enroulées autour de chacun des bras. Chaque bras est alors muni d'un enroulement primaire et un enroulement secondaire. Lorsque le transformateur comprend trois bras entourés chacun par un enroulement primaire et un enroulement secondaire, le transformateur est un transformateur de type triphasé. Dans certains cas, le transformateur comprend une seule bobine enroulée autour de l'un des bras du noyau magnétique. La seule bobine remplit à la fois le rôle d'enroulement primaire et d'enroulement secondaire. Dans ces cas, le transformateur est un autotransformateur.

L'enroulement primaire est configuré pour créer un flux magnétique après avoir reçu le signal d'entrée. Le flux magnétique est transmis au noyau magnétique. Dans le noyau magnétique, le flux magnétique circule jusqu'à arriver à l'enroulement secondaire, configuré pour créer le signal de sortie.

Cet exposé concerne également un système informatique configuré pour mettre en œuvre le procédé de sélection d'un modèle de transformateur. Le procédé de sélection d'un modèle de transformateur selon le présent exposé est donc mis en œuvre par le système informatique. Le système informatique comprend un processeur adapté pour la mise en œuvre du procédé de sélection d'un modèle de transformateur. Dans certains exemples, le processeur comprend des circuits électroniques de calcul gérés par le système informatique et permettant d'implémenter une série d'algorithmes nécessaires pour le fonctionnement dudit système informatique. Dans certains cas, le système informatique est configuré pour être commandé par un usager dudit système informatique. Dans certains cas, le système informatique est configuré pour fonctionner de manière automatique, sans intervention d'un usager dudit système informatique.

Cet exposé concerne aussi un programme informatique comportant des instructions pour la mise en œuvre du procédé de sélection d'un modèle de transformateur lorsque ce programme est exécuté par le processeur du système informatique.

Cet exposé concerne en outre un procédé de fabrication d'un transformateur. Le procédé de fabrication est compris comme un protocole comprenant un ensemble de techniques visant l'obtention physique du transformateur. Par « obtention physique » on entend une obtention sous forme matérielle du transformateur. En particulier, le procédé de fabrication vise l'obtention sous forme matérielle du transformateur correspondant au modèle de transformateur choisi après avoir appliqué le procédé de sélection d'un modèle de transformateur. Bien entendu, plusieurs modèles de transformateur choisis lors du procédé de sélection d'un modèle de transformateur peuvent être concernés par le procédé de fabrication. Le procédé de fabrication du transformateur comprend par exemple la production d'au moins une bobine et du noyau magnétique et l'assemblage de la bobine et du noyau magnétique.

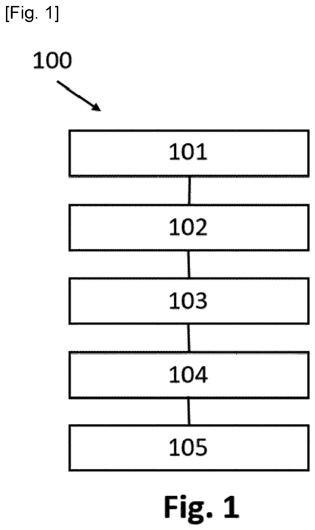

La figure 1 montre un exemple d'un procédé de sélection 100 d'un modèle de transformateur. Le procédé de sélection 100 comprend des blocs 101-105 qui seront expliqués ci-après.

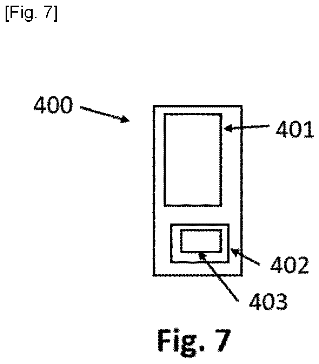

Le procédé 100 de sélection du modèle de transformateur comprend dans le bloc 101 la modélisation d'un modèle de transformateur. Par « modélisation » on entend la réalisation d'un modèle de transformateur tel que décrit ci-avant. A cette fin, un logiciel de modélisation ou de simulation dédié et mis en œuvre par un exemple de système informatique 400 peut être employé. Le système informatique 400 sera décrit ultérieurement en référence à la figure 7.

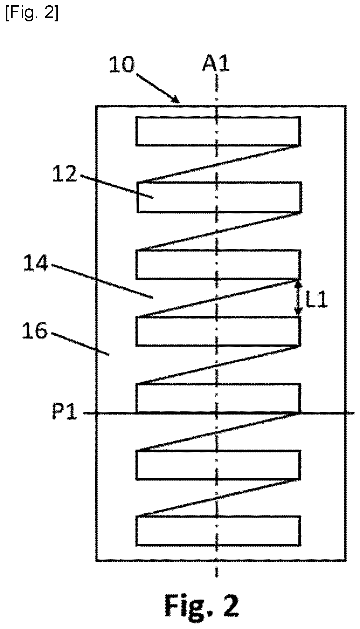

La modélisation du modèle de transformateur comprend la modélisation d'une bobine 10. La figure 2 montre une vue schématique d'un exemple de bobine 10. La bobine 10 fait partie du modèle de transformateur. Dans certains exemples, la bobine 10 est une bobine haute tension. Comme dit précédemment, la bobine haute tension est susceptible de recevoir des surtensions de haute fréquence car elle peut être connectée à un disjoncteur haute tension (non représenté).

La bobine 10 modélisée a une structure similaire à la structure de bobine de transformateur présentée précédemment. En particulier, la bobine 10 est modélisée avec une pluralité de galettes 12. La pluralité de galettes 12 sont reparties selon une direction longitudinale A1 de la bobine 10. La modélisation de la bobine 10 comprend un choix d'un nombre total de galettes 12 dans la bobine 10. Sur l'exemple de la figure 2, sept galettes 12 sont représentées, mais ce nombre de galettes 12 n'est pas limitatif. Dans certains cas, la bobine 10 comprend plus de sept galettes 12. Dans certains cas, la bobine 10 comprend moins de vingt galettes 12. Dans certains cas, la bobine 10 comprend entre sept et quinze galettes 12.

Un espace 14 est prévu entre deux galettes 12 successives. Une longueur L1 de l'espace 14 correspond à une distance selon la direction longitudinale A1 entre les deux galettes 12 successives de la bobine 10. La modélisation de la bobine 10 comprend un choix de la longueur de l'espace 14. Dans certains cas, tous les espaces 14 entre deux galettes 12 successives ont la même longueur L1. Dans certains cas, la longueur L1 d'au moins l'un des espaces 14 est différente par rapport à la longueur L1 d'autres espaces 14.

La bobine 10 est aussi modélisée, dans certains cas, avec une pluralité de spires (non illustrées) comprises dans chaque galette 12. Dans certains cas, la pluralité de spires de chaque galette 12 est formée par des enroulements d'un fil métallique autour de la direction longitudinale A1 de la bobine 10. Dans certains exemples, les enroulements du fil métallique formant les spires de chaque galette 12 sont faits dans un plan P1 sensiblement normal ou perpendiculaire à la direction longitudinale A1 de la bobine 10. Autrement dit, le fil métallique est enroulé en spirale autour de la direction longitudinale A1 dans le plan P1, de manière à former plusieurs tours du fil métallique dans le plan P1. Chaque tour du fil métallique dans le plan P1 correspond à une spire. Chaque galette 12 est associée à un plan P1 respectif.

La modélisation de la bobine 10 comprend un choix d'un nombre total de spires dans chaque galette 12. Dans certains cas, chaque galette 12 comprend plus de 50 spires. Dans certains cas, chaque galette 12 comprend moins de 100 spires. Dans certains cas, chaque galette 12 comprend entre 50 et 100 spires. Chaque galette 12 peut contenir un même nombre de spires. Dans certains cas, au moins une galette 12 contient un nombre différent de spires par rapport au nombre de spires des autres galettes 12. Dans certains exemples, plus de 500 spires sont prévues dans la bobine 10. Dans certains exemples, moins de 1000 spires sont prévues dans la bobine 10.

Un matériau (non illustré) est disposé entre chaque spire. La modélisation de la bobine 10 comprend également un choix du matériau disposé entre chaque spire de la bobine 10. Le matériau est un matériau isolant. Le matériau est par exemple un matériau polymère. Dans certains cas, le matériau est du poly(téréphtalate d'éthylène) (PET).

Dans certains cas, comme illustré sur la figure 2, la bobine 10 est enrobée d'une résine 16. La résine 16 est placée autour de la bobine 10. En outre, la résine 16 remplit, en totalité ou en partie, les espaces 14 entre deux galettes 12 successives. La modélisation de la bobine 10 comprend également un choix de la résine 16. En particulier, le choix de la résine 16 comprend par exemple au moins l'un d'entre un choix d'un type de résine ou un choix d'une composition de ladite résine. Dans certains exemples, la résine 16 est une résine époxy.

Pour la modélisation de la bobine 10, les choix du nombre total de galettes 12, du nombre total de spires, de la longueur L1 de l'espace 14, du matériau entre spires ou de la résine 16 peuvent être faits manuellement par l'usager du système informatique 400. Le choix manuel peut par exemple être fait à partir d'une interface graphique du système informatique 400. Dans certains cas, les choix du nombre total de galettes 12, du nombre total de spires, de la longueur L1 de l'espace 14, du matériau entre spires ou de la résine 16 sont faits automatiquement par le système informatique 400. Selon un exemple, le choix automatique par le système informatique 400 peut être fait de manière aléatoire. Selon un exemple, le choix automatique peut prendre en compte les choix faits précédemment pour la modélisation d'autres modèles de transformateur, de manière à assurer que le modèle de transformateur en cours de modélisation possède au moins une caractéristique différente par rapport aux modèles de transformateur précédemment modélisés.

Dans le modèle de transformateur, la bobine 10 remplit le rôle d'enroulement primaire tel que décrit précédemment. Bien entendu, le modèle de transformateur peut être modélisé avec plusieurs bobines, de manière à ce que le rôle d'enroulement secondaire tel que décrit ci-avant soit remplit par une bobine différente de la bobine 10. De même, comme dans l'exemple de transformateur précédemment présenté, le modèle de transformateur peut comprendre au moins une bobine basse tension concentrique par rapport à la bobine haute tension.

La bobine 10 est configurée pour supporter une valeur maximale admissible de champ électrique. La valeur maximale admissible de champ électrique correspond à un champ électrique qui peut circuler dans la bobine 10 sans endommager structurellement et/ou fonctionnellement la bobine 10. Dans certains cas, la valeur maximale admissible de champ électrique peut correspondre à une valeur de champ électrique au-delà de laquelle la bobine 10 commence à être endommagée. Dans certains cas, la valeur maximale admissible de champ électrique correspond à toute autre valeur de champ électrique assurant que la bobine 10 n'est pas endommagée.

La valeur maximale admissible de champ électrique peut dépendre de la longueur L1 de l'espace 14 entre deux galettes 12 successives, du matériau disposé entre chaque spire et de la résine 16 choisis pour la bobine 10 lors de la modélisation du modèle de transformateur. Dans certains exemples, en fonction de la résine 16 choisie, la résine 16 résistera sans être endommagée à des valeurs différentes de champ électrique. Ainsi, la valeur maximale admissible de champ électrique peut varier en fonction de la résine 16 choisie. Dans certains exemples, en fonction du matériau entre spires choisi, ledit matériau résistera sans être endommagé à des valeurs différentes de champ électrique. Ainsi, la valeur maximale admissible de champ électrique peut varier en fonction du matériau entre spires choisi.

Dans certains cas, afin de mettre en œuvre le procédé 100, la bobine du modèle de transformateur est modélisée de manière à choisir au moins un paramètre structurel parmi :
- le nombre total de galettes 12 ;
- le nombre total de spires dans chaque galette 12 ;
- la longueur L1 de l'espace 14 ;
- une distance entre bobines haute tension et bobines basse tension concentriques ;
- le matériau disposé entre chaque spire de la pluralité de spires de la bobine ; et
- la résine 16.

Ainsi, la valeur maximale admissible de champ électrique supporté par la bobine 10 peut être différente en fonction des choix réalisés pour les paramètres structuraux. Le profil de performance du modèle de transformateur modélisé peut donc varier en fonction des choix réalisés pour lesdits paramètres structuraux.

Le bloc 102 du procédé 100 comprend la détermination d'un intervalle de fréquences comprenant un ensemble de fréquences de résonance du modèle de transformateur. Dans certains cas, par « intervalle de fréquences » on entend un ensemble continu de fréquences d'oscillation d'une tension traversant le modèle de transformateur. Dans certains cas, par « intervalle de fréquences » on entend un ensemble discret de fréquences d'oscillation de la tension traversant le modèle de transformateur. Par « fréquences de résonance » on entend des fréquences d'oscillation de la tension traversant le modèle de transformateur pour lesquelles un phénomène de résonance a lieu.

La détermination de l'intervalle de fréquences comprenant l'ensemble de fréquences de résonance du modèle de transformateur est réalisée par exemple à partir de la détermination de la réponse en impédance du modèle de transformateur.

La détermination des réponses en impédance du modèle de transformateur est réalisée par le système informatique 400. A partir de la détermination de la réponse en impédance du modèle de transformateur, une courbe d'impédance est obtenue.

Par « courbe d'impédance » on entend une courbe représentant une évolution d'un module et/ou d'un argument d'une impédance du modèle de transformateur en fonction d'une fréquence d'oscillation de la tension traversant le modèle de transformateur.

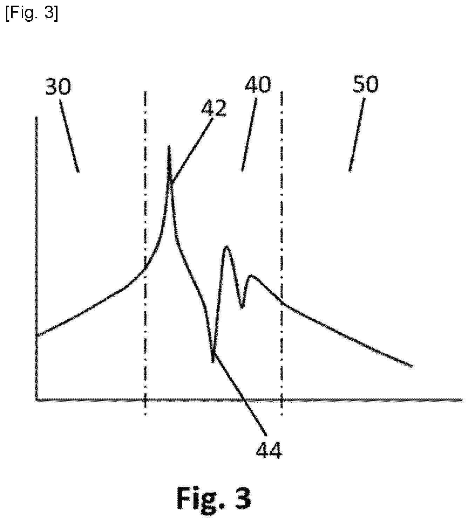

La figure 3 montre un graphe représentant un exemple de courbe d'impédance associée au modèle de transformateur. L'axe des abscisses correspond à la fréquence d'oscillation de la tension traversant le modèle de transformateur. L'axe des ordonnées correspond au module ou à l'argument de l'impédance du modèle de transformateur.

La courbe d'impédance a une première zone 30, une deuxième zone 40 et une troisième zone 50.

La première zone 30 correspond à une zone basse fréquence. Dans la première zone 30, le modèle de transformateur présente un comportement inductif. Le comportement inductif est caractérisé par une croissance de l'impédance lorsque la fréquence d'oscillation de la tension traversant le modèle de transformateur augmente.

La troisième zone 50 correspond à une zone haute fréquence. Dans la troisième zone 50, le modèle de transformateur présente un comportement capacitif. Le comportement capacitif est caractérisé par une décroissance de l'impédance lorsque la fréquence d'oscillation de la tension traversant le modèle de transformateur augmente.

La deuxième zone 40 correspond à une zone de fréquences intermédiaires entre la zone basse fréquence et la zone haute fréquence. Dans la deuxième zone, la courbe d'impédance est caractérisée par la présence d'un ensemble de pics 42 et un ensemble de creux 44. La fréquence à laquelle apparaissent chaque pic 42 et chaque creux 44 de la courbe d'impédance correspond à une fréquence de résonance du modèle de transformateur.

Ainsi, l'obtention de la courbe d'impédance permet de déterminer l'intervalle de fréquences comprenant l'ensemble de fréquences de résonance du modèle de transformateur. Dans certains cas, l'intervalle de fréquences déterminé comprend toutes les fréquences de résonance du modèle de transformateur. Dans certains cas, l'intervalle de fréquences déterminé comprend uniquement une partie des fréquences de résonance du modèle de transformateur. Dans certains exemples, le premier pic 42 de la courbe d'impédance correspond à une fréquence d'oscillation de la tension traversant le modèle de transformateur à laquelle le risque d'endommagement du modèle de transformateur est faible. Par conséquent, le premier pic 42 de la courbe d'impédance peut être exclu de l'intervalle de fréquences déterminé. Par « premier pic » on entend le pic 42 associé à la fréquence la plus petite parmi les pics 42. Dans certains cas, le premier creux 44 de la courbe d'impédance correspond à une fréquence d'oscillation de la tension traversant chaque modèle de transformateur à laquelle le risque d'endommagement du modèle de transformateur est particulièrement important. Par conséquent, le premier creux 44 de la courbe d'impédance peut être inclus dans l'intervalle de fréquences déterminé. Par « premier creux » on entend le creux 44 associé à la plus petite fréquence parmi les creux 44.

La réponse en impédance du modèle de transformateur varie en fonction des choix faits pour le nombre de galettes 12, le nombre de spires, la longueur L1 des espaces 14, la distance entre les bobines haute tension et bobines basse tension concentriques, le matériau entre spires, et la résine 16 de la bobine 10 pendant la modélisation selon le bloc 101.

Le bloc 102 peut comprendre en outre le choix d'un pas de fréquence. Le pas de fréquence choisi détermine un ensemble de fréquences incluses dans l'intervalle de fréquences déterminé pour lesquelles une tension à des nœuds du modèle de transformateur est calculée. La tension calculée aux nœuds du modèle de transformateur est donc une tension oscillant sur l'intervalle de fréquences déterminé. Par « tension oscillant » on entend une tension variant dans le temps. Dans certains cas, le pas de fréquence choisi est fin. Ainsi, le nombre de fréquences incluses dans l'intervalle de fréquences déterminé, pour lesquelles la tension aux nœuds du transformateur est calculée, augmente.

Le bloc 103 du procédé 100 comprend le calcul d'un champ électrique maximal agissant sur la bobine 10 lorsque le modèle de transformateur est traversé par chacune des tensions aux nœuds du modèle de transformateur calculées. Le calcul du champ électrique est réalisé par le système informatique 400. En particulier, le système informatique 400 est configuré pour simuler le passage dans le modèle de transformateur d'un ensemble de tensions oscillant aux fréquences incluses dans l'intervalle de fréquences déterminé. Ainsi, on obtient un ensemble de valeurs de champ électrique agissant sur la bobine. Chaque valeur de champ électrique obtenue est donc associée à l'une des tensions oscillant aux fréquences de l'intervalle de fréquences. A partir de l'ensemble de valeurs de champ électrique obtenu, le champ électrique maximal est déterminé. En particulier, le champ électrique maximal correspond à la plus grande des valeurs obtenues de champ électrique agissant sur la bobine 10.

Selon un exemple, le calcul du champ électrique maximal selon le bloc 103 pourrait être réalisé par le système informatique 400 à partir de la simulation du passage dans le modèle de transformateur des tensions oscillant uniquement aux fréquences correspondant aux pics 42 et aux creux 44 incluses dans l'intervalle de fréquences déterminé. Ainsi, on obtient un ensemble de valeurs de champ électrique agissant sur la bobine 10 lorsque le modèle de transformateur est traversé uniquement par les tensions oscillant aux fréquences de résonance du modèle de transformateur incluses l'intervalle de fréquences déterminé.

Dans certains cas, plus les pics 42 et les creux 44 sont réduits, plus le champ électrique maximal du modèle de transformateur est petit.

Le bloc 104 du procédé 100 comprend la comparaison du champ électrique maximal avec la valeur maximale admissible de champ électrique supporté par la bobine 10. En particulier, la comparaison entre le champ électrique maximal et la valeur maximale admissible de champ électrique permet de déterminer si le champ électrique maximal est par exemple strictement inférieur à la valeur maximale admissible de champ électrique. Dans certains cas, le système informatique 400 est configuré pour déterminer si le champ électrique maximal est strictement inférieur à la valeur maximale admissible de champ électrique. Dans certains cas, l'usager du système informatique 400 peut lui-même déterminer si le champ électrique maximal est strictement inférieur à la valeur maximale admissible de champ électrique.

Le bloc 105 du procédé 100 comprend la sélection du modèle de transformateur. La sélection selon le bloc 105 prend en compte la comparaison selon le bloc 104. Dans certains exemples, le modèle de transformateur sera sélectionné si le champ électrique maximal est strictement inférieur à la valeur maximale admissible de champ électrique. Le choix du modèle de transformateur dont le champ électrique maximal est strictement inférieur à la valeur maximale admissible de champ électrique permet de sélectionner le modèle de transformateur ayant un risque limité d'être endommagé en présence d'une surtension.

Dans certains cas, si lors de la comparaison selon le bloc 104, le champ électrique maximal est supérieur ou égal à la valeur maximale admissible de champ électrique supporté par la bobine 10, le modèle de transformateur modélisé n'est pas sélectionné. Dans ces cas, le procédé 100 peut être répété à partir de la modélisation selon le bloc 101 d'un autre modèle de transformateur différant du modèle de transformateur non sélectionnée au moins dans l'un des paramètres structuraux précédemment cités. Le procédé 100 peut en particulier être répété successivement jusqu'à ce qu'un modèle de transformateur est sélectionné.

Dans certains cas, la modélisation comprise dans le bloc 101 du procédé 100 ne se limite pas à la modélisation d'un seul modèle de transformateur. La modélisation comprise dans le bloc 101 peut comprendre la modélisation d'un ou plusieurs modèle(s) de transformateur supplémentaire(s). Dans ce cas, chaque modèle de transformateur supplémentaire comprend une bobine respective. Chaque bobine respective est structurellement et fonctionnellement similaire à la bobine 10. Ainsi, chaque bobine respective est définie par un nombre de galettes, un nombre de spires, une longueur d'un espace entre deux galettes successives, un matériau disposé entre les spires et une résine enrobant la bobine. Ainsi, chaque bobine respective est configurée pour supporter une valeur maximale admissible de champ électrique respective. Le procédé 100 tel que décrit ci-avant est alors appliqué séparément pour chaque modèle de transformateur modélisé. Plusieurs modèles de transformateur peuvent alors être sélectionnés lors de la sélection selon le bloc 105. Dans ces cas, une sélection finale peut être prévue pour sélectionner un unique modèle de transformateur parmi les modèles de transformateurs sélectionnés lors de la sélection selon le bloc 105. La sélection finale peut par exemple être déterminée par une différence entre la valeur maximale admissible et le champ électrique maximal de chaque modèle de transformateur sélectionné. La sélection finale peut par exemple être déterminée par le coût de fabrication de chaque modèle de transformateur sélectionné. La sélection finale peut par exemple être déterminée par la disponibilité des matériaux nécessaire pour chaque modèle de transformateur sélectionné.

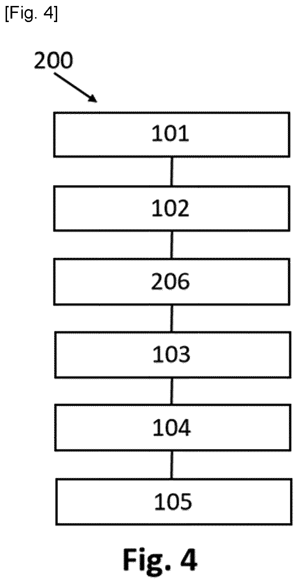

La figure 4 montre un deuxième exemple de procédé de sélection 200 d'un modèle de transformateur. Le procédé de sélection 200 comprend les blocs 101-105 et un bloc 206. Les blocs 101-105 sont les mêmes que les blocs 101-105 de l'exemple de procédé de sélection 100. Par conséquent ils ne seront pas détaillés de nouveau.

Le bloc 206 comprend la détermination d'une distribution de tension dans la bobine 10. La détermination de la distribution de tension est faite par le système informatique 400. En particulier, la détermination de la distribution de tension est faite à partir de la simulation du passage dans le modèle de transformateur d'une tension oscillant à une fréquence donnée. Dans certains exemples, la fréquence donnée est incluse dans l'intervalle de fréquences comprenant l'ensemble de fréquences de résonance du modèle de transformateur. Dans certains cas, la fréquence donnée correspond à l'une des fréquences de résonance du modèle de transformateur. La distribution de tension permet de déterminer un facteur d'amplification de la tension agissant sur la bobine 10 pour chaque galette 12. La distribution de tension permet également de déterminer une évolution d'un gradient de tensions entre chaque galette 12 de la bobine 10.

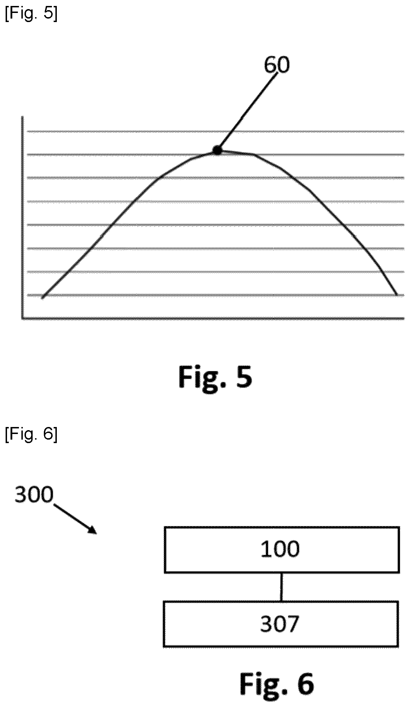

La figure 5 montre un graphe représentant un exemple de distribution de tension associée à la bobine 10. L'axe des abscisses correspond à un rapport d'une longueur de la bobine 10 parcourue par la tension agissant sur la bobine 10 sur une longueur totale de la bobine 10. L'axe des ordonnées correspond au facteur d'amplification de la tension agissant sur la bobine 10.

La distribution de tension montre dans ce cas qu'une valeur maximale du facteur d'amplification de la tension agissant sur la bobine 10 est obtenue à un point 60 situé sensiblement à la moitié de la longueur totale de la bobine 10. Cela veut dire qu'une galette 12 située à proximité du point 60 concentre plus de tension que les autres galettes. Dans certains cas, plus la valeur maximale du facteur d'amplification de la tension est élevée, plus le risque de claquage du transformateur est important. Ainsi, le procédé de sélection 200 vise dans certains cas à sélectionner le modèle de transformateur dont la distribution de tension présente une valeur maximale de facteur d'amplification faible. Cela implique de sélectionner le modèle de transformateur présentant une courbe de distribution de tension sensiblement plate.

Le graphe représentant la distribution de tension reflète aussi l'évolution du gradient de tensions entre chaque galette 12 de la bobine 10. Le gradient de tensions permet d'analyser une différence entre des valeurs de la tension entre deux espaces 14. La variation de la différence entre des valeurs de la tension entre deux espaces 14 est dans certains cas particulièrement importante aux extrémités de la bobine 10, ce qui est reflété par la pente de la distribution de tension dans les zones du graphe de la figure 5 correspondant aux extrémités de la bobine 10. Dans certains cas, plus la pente de la distribution de tension est élevée, plus le gradient de tension dans la bobine est grand. Plus le gradient de tensions est élevé, plus le risque de claquage du transformateur est important. Ainsi, le procédé de sélection 200 vise dans certains cas à sélectionner le modèle de transformateur dont le gradient de tensions est faible. Cela implique de sélectionner le modèle de transformateur présentant une courbe de distribution de tension sensiblement plate.

Ainsi, dans certains cas, à partir de la modélisation selon le bloc 101 on cherche à obtenir un modèle de transformateur dont la distribution de tension est la plus aplatie possible. Cela permet d'une part d'éviter des facteurs d'amplification très élevés. D'autre part, la distribution de tension aplatie implique que le gradient de tension est faible dans la bobine.

Une diminution du nombre de galettes 12, une augmentation de la longueur L1 des espaces 14, une diminution du nombre de spires dans chaque galette 12 ou une augmentation de la distance entre bobines haute tension et bobines basse tension concentriques peut provoquer une diminution du gradient de tension dans la bobine 10, de manière à provoquer un aplatissement de la distribution de tension.

Il est noté que dans certains cas, les facteurs d'amplification les plus élevés sont obtenus lorsque la tension traversant le modèle de transformateur oscille à une fréquence correspondant à la fréquence associée au premier creux 44 de la courbe d'impédance respective du modèle de transformateur.

Dans l'exemple de la figure 4, la détermination de la distribution de tension selon le bloc 206 a lieu après la détermination de l'intervalle de fréquences selon le bloc 102. Dans certains cas, la détermination de la distribution de tension selon le bloc 206 peut avoir lieu à tout moment compris entre la détermination de l'intervalle de fréquences selon le bloc 102 et la sélection du modèle de transformateur selon le bloc 105.

Le présent exposé concerne aussi un exemple de procédé 300 de fabrication d'un transformateur. La figure 6 montre un exemple du procédé 300 de fabrication du transformateur. Le procédé 300 comprend des blocs 100 et 307. Le bloc 100 correspond à l'exemple de procédé de sélection 100 décrit ci-avant. Par conséquent, il ne sera pas détaillé ci-après. Dans certains cas, le procédé 300 de fabrication d'un transformateur pourrait comprendre des blocs 200 et 307, le bloc 200 correspondant à l'exemple de procédé de sélection 200 décrit ci-avant. En particulier, le procédé de fabrication vise l'obtention sous forme matérielle du transformateur correspondant au modèle de transformateur sélectionné après avoir appliqué le procédé de sélection 100 d'un modèle de transformateur. Lorsque plusieurs modèles de transformateur sont sélectionnés après avoir appliqué le procédé de sélection 100, le procédé 300 de fabrication peut viser l'obtention de chacun des modèles de transformateur sélectionnés.

Le bloc 307 comprend la fabrication du transformateur selon le(s) modèle(s) sélectionné(s) à partir du procédé 100. La fabrication permet d'obtenir sous forme physique le(s) transformateur(s) correspondant au(x) modèle(s) de transformateur(s) sélectionné(s). Dans certains exemples, le transformateur fabriqué est un transformateur de type sec enrobé.

La figure 7 montre un exemple de système informatique 400 comprenant un processeur 401. Le processeur 401 est par exemple adapté pour la mise en œuvre du procédé de sélection 100 ou 200 d'un modèle de transformateur selon les exemples décrits ci-avant. Le processeur 401 peut comprendre des circuits électroniques de calcul gérés par un système d'exploitation.

Le système informatique 400 comprend en outre un support de stockage 402 non transitoire lisible par machine ou par le système informatique 400. Le support de stockage 402 est par exemple une mémoire ou unité de stockage. Le support de stockage 402 selon la présente divulgation peut en particulier être tout dispositif de stockage électronique, magnétique, optique ou autre dispositif physique qui stocke des instructions exécutables. La mémoire peut être, par exemple, une mémoire vive (ou RAM, de l'anglais « *Random-access memory* »)*,* une mémoire morte programmable effaçable électriquement (ou EEPROM, de l'anglais « *Electrically-Erasable Programmable Read-Only Memory* »), un lecteur de carte mémoire, un disque optique, etc.

Le support de stockage 402 peut par exemple stocker un programme informatique selon la présente divulgation. Le programme informatique comporte des instructions 403 pour la mise en œuvre du procédé 100, 200 de sélection d'un modèle de transformateur tel que décrit ci-avant. Le programme informatique est exécuté par le processeur 401.

Comme précédemment dit, le système informatique 400 peut comprendre en outre une interface graphique (non illustrée) permettant à l'utilisateur de choisir manuellement les paramètres structuraux de la bobine 10 modélisée.

## Revendications

1. Procédé de sélection (100, 200) d'un modèle de transformateur, le procédé étant mis en œuvre par un système informatique (400), le procédé comprenant :
- la modélisation d'un modèle de transformateur comprenant une bobine (10) configurée pour supporter un champ électrique ;
- la détermination d'un intervalle de fréquences comprenant un ensemble de fréquences de résonance du modèle de transformateur ;
- le calcul d'un champ électrique maximal agissant sur la bobine (10) lorsque le modèle de transformateur est traversé par une tension oscillant sur ledit intervalle de fréquences ;
- la comparaison du champ électrique maximal avec une valeur maximale admissible de champ électrique ; et
- la sélection du modèle de transformateur en fonction de la comparaison effectuée précédemment.

2. Procédé (100, 200) selon la revendication 1, dans lequel la détermination de l'intervalle de fréquences comprenant l'ensemble de fréquences de résonance du modèle de transformateur est réalisée à partir de la détermination d'une réponse en impédance du modèle de transformateur.

3. Procédé (200) selon la revendication 1 ou la revendication 2, comprenant en outre la détermination d'une distribution de tension dans la bobine (10).

4. Procédé (200) selon la revendication 3, dans lequel la sélection du modèle de transformateur tient compte d'une caractéristique de la distribution de tension dans la bobine (10).

5. Procédé (100, 200) selon l'une quelconque des revendications précédentes, dans lequel la modélisation du modèle de transformateur comprend la modélisation de la bobine (10) avec une pluralité de galettes (12), chaque galette (12) de la bobine (10) comprenant une pluralité de spires.

6. Procédé (100, 200) selon la revendication 5 dans lequel la modélisation du modèle de transformateur comprend la modélisation de la bobine (10) avec un espace (14) prévu entre chaque galette (12) de la bobine (10).

7. Procédé (100, 200) selon la revendication 5 ou la revendication 6, dans lequel la modélisation du modèle de transformateur comprend le choix d'un matériau disposé entre chaque spire de la pluralité de spires de la bobine (10).

8. Procédé (100, 200) selon l'une quelconque des revendications précédentes, dans lequel la modélisation du modèle de transformateur comprend le choix d'une résine (16) pour enrober la bobine (10).

9. Procédé (100, 200) selon l'ensemble des revendications 5 à 8, dans lequel la bobine (10) est modélisée de manière à choisir au moins un paramètre structurel parmi :
- un nombre total de galettes (12) ;
- un nombre total de spires dans chaque galette (12) ;
- une longueur (L1) de l'espace (14) prévu entre chaque galette (12) de la bobine ;
- une distance entre bobines haute tension et bobines basse tension concentriques ;
- le matériau disposé entre chaque spire de la pluralité de spires de la bobine (10); et
- la résine (16) enrobant la bobine (10).

10. Procédé (100, 200) selon l'une quelconque des revendications précédentes, comprenant en outre la modélisation d'un ou plusieurs modèle(s) de transformateur supplémentaire(s), chaque modèle de transformateur supplémentaire comprenant une bobine respective configurée pour supporter un champ électrique respectif, le procédé comprenant en outre la détermination d'un intervalle de fréquences comprenant un ensemble de fréquences de résonance respectives de chaque modèle de transformateur supplémentaire.

11. Procédé de fabrication (300) d'un transformateur comprenant le procédé de sélection (100, 200) d'un modèle de transformateur selon l'une quelconque des revendications précédentes, le procédé de fabrication (300) comprenant la fabrication du transformateur selon le modèle sélectionné.

12. Procédé de fabrication (300) d'un transformateur selon la revendication 11, le transformateur étant un transformateur de type sec enrobé.

13. Programme informatique comportant des instructions pour la mise en œuvre du procédé de sélection (100, 200) d'un modèle de transformateur selon l'une quelconque des revendications 1 à 10, lorsque ce programme est exécuté par un processeur adapté pour la mise en œuvre du procédé de sélection (100, 200) d'un modèle de transformateur selon l'une des revendications 1 à 10.

14. Système informatique (400) comprenant un processeur (401) adapté pour la mise en œuvre du procédé de sélection (100, 200) d'un modèle de transformateur selon l'une quelconque des revendications 1 à 10.
